(19) Europäisches Patentamt / European Patent Office / Office européen des brevets

(11) **EP 4 063 891 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **22160236.0**

(22) Anmeldetag: **04.03.2022**

(51) Internationale Patentklassifikation (IPC):
**G01S 3/38** *(2006.01)* **H04B 7/04** *(2017.01)*

(52) Gemeinsame Patentklassifikation (CPC):
**G01S 3/38; H04B 7/04**

(54) **SYSTEM UND VERFAHREN ZUM DETEKTIEREN UND LOKALISIEREN EINER SIGNALQUELLE**

SYSTEM AND METHOD FOR DETECTING AND LOCATING A SIGNAL SOURCE

SYSTÈME ET PROCÉDÉ DE DÉTECTION ET DE LOCALISATION D'UNE SOURCE DE SIGNAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2021 DE 102021107220**

(43) Veröffentlichungstag der Anmeldung:
**28.09.2022 Patentblatt 2022/39**

(73) Patentinhaber: **Airbus Defence and Space GmbH 82024 Taufkirchen (DE)**

(72) Erfinder: **KRACH, Bernhard 82024 Taufkirchen (DE)**

(74) Vertreter: **LKGLOBAL Partnerschaftsgesellschaft mbB Brienner Straße 11 80333 München (DE)**

(56) Entgegenhaltungen:
**EP-A1- 1 903 348 WO-A1-2016/207603 WO-A1-99/57574**

**Beschreibung**

Technisches Gebiet

Die vorliegende Beschreibung betrifft allgemein das technische Gebiet der Signalaufklärung, beispielsweise der elektromagnetischen oder akustischen Aufklärung, sowie das Aufspüren von signalemittierenden Quellen, sog. Signalquellen. Insbesondere betrifft die Beschreibung Systeme und Verfahren zum Detektieren und Lokalisieren einer Signalquelle.

Technischer Hintergrund

Das Detektieren und Lokalisieren von elektromagnetischen Signalquellen hat insbesondere im militärischen Umfeld eine hohe Bedeutung für das Erstellen eines zutreffenden Lagebildes. Elektromagnetische Signale werden beispielsweise von feindlichen Waffensystemen oder Aufklärungssystemen emittiert. Das Detektieren und Lokalisieren von solchen Signalquellen bietet damit die Möglichkeit, sich dem Einfluss feindlicher Waffensysteme und/oder der Detektion durch feindliche Aufklärung zu entziehen.

Ein herkömmlicher Ansatz für das Detektieren und Lokalisieren von Signalquellen ist unter dem Begriff "Triangulation" bekannt. Hierbei detektieren und lokalisieren mehrere Sensoren eine Signalquelle und bestimmen die relative Position der Signalquelle zu der eigenen Position der Sensoren. Diese relative Position der Signalquelle zu der Position der Sensoren kann als Richtungsvektor angegeben werden. Die Richtungsvektoren von mehreren (mindestens zwei, zumeist mindestens drei) Sensoren können verwendet werden, um ihren Schnittpunkt zu bestimmen. Als Ort der Signalquelle kann dann der Schnittpunkt bzw. ein Bereich um den Schnittpunkt herum angegeben werden.

Während dieser Ansatz durch seine Einfachheit besticht, kann er aber auch gewisse Nachteile haben. Wenn beispielsweise ein Sensor aus welchen Gründen auch immer die Richtung zu der Signalquelle nicht bestimmen kann, ist im schlimmsten Fall eine Positionsbestimmung der Signalquelle gar nicht möglich.

WO 99/57574 A1 beschreibt eine Vorrichtung und ein Verfahren zum Bestimmen der Einfallsrichtung eines Signals. Zwei Antennenarrays sind mit jeweiligen Prozessoren verbunden, um unabhängig voneinander in jeweils einem Richtungsschätzer eine Einfallsrichtung eines Signals zu bestimmen. Diese unabhängig voneinander bestimmten Einfallsrichtungen können mit einer Kovarianzmatrix ausgedrückt werden. Die unabhängig voneinander bestimmten Einfallsrichtungen werden an eine zentrale Ähnlichkeitsüberprüfungseinheit übermittelt, welche die Abweichung zwischen den unabhängig voneinander bestimmten Einfallsrichtungen ermittelt.

WO 2016/207603 A1 beschreibt ein Verfahren zum Konfigurieren eines drahtlosen Netzes mit mehreren Knoten, um den Einfluss von externen Interferenzquellen zu reduzieren. Eine Untermenge der Knoten des Netzes nehmen an einem Interferenzerfassungsvorgang teil. In diesem Interferenzerfassungsvorgang erfasst jeder Knoten der Untermenge Signale, die von einem Antennenarray des jeweiligen Knotens erfasst wurden. Ein Messbericht enthält einen Signalquellenwinkel und eine erfasste Signalstärke. Ein Ort der externen Interferenzquelle wird unter Verwendung des von einem Knoten erhaltenen Messberichts geschätzt. Die externe Interferenzquelle wird charakterisiert unter Verwendung des geschätzten Ortes der externen Interferenzquelle und der empfangenen Signalstärke, um für die externe Interferenzquelle unter anderem eine Quellenleistung oder eine Strahlweite zu berechnen. Die mehreren Knoten werden so konfiguriert, dass der Einfluss der externen Interferenzquelle in Abhängigkeit von der Charakterisierung reduziert wird.

Beschreibung

Es kann als Aufgabe betrachtet werden, die Effizienz in einem System zum Detektieren und Lokalisieren einer Signalquelle mit räumlich verteilten Antennenarrays und einer davon getrennten Auswerteeinheit zu verbessern.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß der Erfindung ist ein System zum Detektieren und Lokalisieren einer Signalquelle angegeben. Das System weist ein Antennenarray mit einer Mehrzahl von Antennen, eine Steuereinheit, welche mit dem Antennenarray verbunden ist, und eine Auswerteeinheit auf. Die Auswerteeinheit ist ausgestaltet, Daten von der Steuereinheit zu empfangen. Die Antennen sind ausgestaltet, ein von der Signalquelle emittiertes Signal zu erfassen. Die Steuereinheit ist ausgestaltet, eine Kreuzkorrelations- oder Kovarianzmatrix eines von dem Antennenarray empfangenen Signals zu ermitteln. Die Steuereinheit ist ausgestaltet, die Kreuzkorrelations- oder Kovarianzmatrix an die Auswerteeinheit zu übertragen. Die Auswerteeinheit ist ausgestaltet, eine Position der Signalquelle basierend auf der von der Steuereinheit empfangenen Kreuzkorrelations- oder Kovarianzmatrix zu ermitteln. Das Antennenarray und die Steuereinheit sind auf einer ersten Trägerplattform angeordnet. Die Auswerteeinheit ist auf einer zweiten Plattform angeordnet. Die erste Trägerplattform ist von der zweiten Trägerplattform räumlich getrennt. Die Auswerteeinheit ist ausgestaltet, die Kreuzkorrelations- oder Kovarianzmatrix mittels leitungsloser Übertragung über einen Datenübertragungskanal zu erhalten.

Die Kreuzkorrelations- oder Kovarianzmatrix ist eine symmetrische Matrix und die Steuereinheit ist ausgestaltet, die Hälfte der Felder der Matrix zu übertragen. Die Steuereinheit ist ausgestaltet, die Kreuzkorrelations- oder Kovarianzmatrix des empfangenen Signals mit gleicher Zeitbasis zu ermitteln, und dadurch eine kohärente Kreuzkorrelations- oder Kovarianzmatrix des Signals zu ermitteln. Die Kreuzkorrelations- oder Kovarianzmatrix enthält Informationen über die statistischen Eigenschaften des empfangenen Signals und drückt aus, wie das empfangene Signal von einer Antenne des Antennenarrays zu einer anderen Antenne desselben Antennenarrays korreliert ist. Die Steuereinheit bildet die Kreuzkorrelations- oder Kovarianzmatrix ausgehend von einer Empfangsmatrix der einzelnen Antennen des Antennenarrays. Die Kreuzkorrelations- oder Kovarianzmatrix enthält Informationen über die Amplitude und Phase des empfangenen Signals. Die Informationen über die Amplitude und Phase des empfangenen Signals von der Steuereinheit in der Kreuzkorrelations- oder Kovarianzmatrix werden an die Auswerteeinheit übermittelt und dienen dort zur Ermittlung der Position der Signalquelle. Die Steuereinheit ist ausgestaltet, neben der Kreuzkorrelations- oder Kovarianzmatrix noch folgende Informationen über das Antennenarray an die Auswerteeinheit zu übertragen: Position des Antennenarrays zum Zeitpunkt, da das von der Signalquelle emittierte Signal erfasst wurde; Ausrichtung des Antennenarrays; Größe und/oder Geometrie des Antennenarrays; einen Rauschleistungspegel.

Das hier beschriebene System ermöglicht es, Signalquellen passiv zu detektieren, zu lokalisieren, und zu verfolgen. Hierfür wir ein Antennenarray verwendet, welches die Signale von der Signalquelle erfasst. Das System ermöglicht es insbesondere, dass Signalquellen detektiert werden, welche Signale niedriger Leistung emittieren. Anstatt dass das Antennenarray eine Einfallsrichtung des von der Signalquelle emittierten Signals ermittelt, wird basierend auf den Empfangssignalen der einzelnen Antennen des Antennenarrays eine Kreuzkorrelations- oder Kovarianzmatrix berechnet, welche dann an die Auswerteeinheit übertragen wird, wo die Kreuzkorrelations- oder Kovarianzmatrix dazu herangezogen wird, die Position der Signalquelle zu ermitteln. Das hier beschriebene System ermöglicht es, dass die Kreuzkorrelations- oder Kovarianzmatrix eines Antennenarrays, welches Bestandteil einer Plattform oder Sensorplattform ist, mit anderen Sensorplattformen oder einer zentralen Instanz, beispielsweise der Auswerteeinheit, ausgetauscht wird, bevor jede einzelne Sensorplattform für sich genommen eine Richtung zu der Signalquelle bestimmt. Die Kreuzkorrelations- oder Kovarianzmatrix wird anstelle der Einfallsrichtung und der Zeitabstände zwischen einzelnen Messungen der einzelnen Antennen des Antennenarrays ausgetauscht und für die Bestimmung der Position der Signalquelle in der Auswerteeinheit herangezogen.

Auch wenn im Zusammenhang dieser Beschreibung beispielhaft auf elektromagnetische Signale Bezug genommen wird, so kann das System und das Verfahren auch für das Detektieren und Lokalisieren von anderen Signalarten, beispielsweise akustischen Signalen, verwendet werden. Der Begriff der Antenne ist dabei so zu verstehen, dass es sich um eine Einrichtung handelt, die dafür ausgelegt ist, die zu detektierende Signalart zu erfassen.

Die Auswerteeinheit ist erfindungsgemäß räumlich getrennt von dem Antennenarray und der Steuereinheit angeordnet. Beispielsweise sind das Antennenarray und die Steuereinheit an Bord einer mobilen Trägereinheit, wie einem Luftfahrzeug, angeordnet. Die Auswerteeinheit kann sich an Bord eines anderen Luftfahrzeugs befinden. Alternativ kann die Auswerteeinheit auch in einer Bodenstation angeordnet sein. In einer anderen Ausführungsform ist die Auswerteeinheit an Bord desselben Luftfahrzeugs angeordnet, welches auch das Antennenarray und die Steuereinheit trägt.

Die Mehrzahl von Antennen des Antennenarrays empfangen ein von der Signalquelle emittiertes Signal. Das von der Mehrzahl von Antennen jeweils empfangene Signal wird von der Steuereinheit verwendet, um die Kreuzkorrelations- oder Kovarianzmatrix zu ermitteln.

Es ist vorgesehen, dass die Kreuzkorrelations- oder Kovarianzmatrix eines Antennenarrays an die Auswerteeinheit übermittelt wird. Diese Matrix ist die Datenbasis, auf der die Einfallsrichtung einer elektromagnetischen Welle, beispielsweise eines Hochfrequenz-Signals, auf das Antennenarray ermittelt wird.

Die besagte Matrix wird anstelle der Einfallsrichtung eines Signals und der Phasenunterschiede zwischen den von den einzelnen Antennen des Antennenarrays erfassten Signalen an die Auswerteeinheit übertragen. Die Matrix kann in zeitlich regelmäßig oder unregelmäßig sich wiederholenden Zeitabständen an die Auswerteeinheit übertragen werden. Das Ermitteln der Position der Signalquelle erfolgt in der Auswerteeinheit. Es ist nicht nötig, dass die Steuereinheit, die mit dem Antennenarray verbunden ist, einen Detektions- und/oder Lokalisierungsvorgang für die Signalquelle erfolgreich abschließt. Vielmehr überträgt die Steuereinheit eine Matrix mit den Feldern N x N, wobei N die Anzahl der Antennen ist, an die Auswerteeinheit, wo dann die Signalquelle lokalisiert und detektiert wird. Insbesondere kann diese Matrix symmetrisch sein, so dass es ausreicht, die Hälfte der Felder der Matrix zu übertragen, was den Umfang der zu übertragenden Daten weiter reduziert.

Die Steuereinheit ermittelt eine kohärente Kreuzkorrelations- oder Kovarianzmatrix, d.h. dass eine Kreuzkorrelations- oder Kovarianzmatrix eines Signals mit gleicher Zeitbasis ermittelt wird. Die Kreuzkorrelations- oder Kovarianzmatrix enthält Informationen über die statistischen Eigenschaften eines Signals und drückt aus, wie das Signal von einer Antenne eines Antennenarrays zu einer anderen Antenne desselben Antennenarrays korreliert ist. Die Steuereinheit bildet eine Kreuzkorrelations- oder Kovarianzmatrix ausgehend von einer Empfangsmatrix der einzelnen Antennen des Antennenarrays. Die Kreuzkorrelations- oder Kovarianzmatrix enthält Informationen über Amplitude und Phase eines Signals. Diese Informationen werden von der Steuereinheit in der Kreuzkorrelations- oder Kovarianzmatrix an die Auswerteeinheit übermittelt und dienen dort dazu, die Position der Signalquelle zu ermittelt. Neben den Informationen über das empfangene Signal werden auch weitere Informationen an die Auswerteeinheit übertragen, nämlich die Position und die Ausrichtung und Größe oder Geometrie des Antennenarrays, sowie einen Rauschleistungspegel.

Das Antennenarray weist mehrere Antennen auf, die räumlich voneinander getrennt bzw. beabstandet sind.

Dieser Aufbau und die Ortung einer Signalquelle durch die Auswerteeinheit basierend auf der Kreuzkorrelations- oder Kovarianzmatrix hat den Vorteil, dass die Steuereinheit und ein zugehöriges Antennenarray für sich genommen nicht zwingend eine Ortung der Signalquelle erfolgreich vornehmen muss. Die Auswerteeinheit kann jeweils eine Kreuzkorrelations- oder Kovarianzmatrix von mehreren Antennenarrays erhalten oder mehrere Kreuzkorrelations- oder Kovarianzmatrizen, die von demselben Antennenarray zu unterschiedlichen Zeitpunkten geliefert wurden, verwenden, um die Signalquelle zu detektieren und zu lokalisieren.

Der hier beschriebene Ansatz kann eine genauere Ortung (Detektieren, Lokalisieren, Nachverfolgen) einer Signalquelle ermöglichen, weil die Kreuzkorrelations- oder Kovarianzmatrix von mehreren Antennenarrays oder von demselben Antennenarray zu unterschiedlichen Zeitpunkten zusammengeführt werden, um die Ortung in der Auswerteeinheit auszuführen. Somit ergibt sich ein verbesserter effektiver Signal-Rausch-Abstand und es können auch Signalquellen geortet werden, die von einer einzelnen Plattform mit einem einzelnen Antennenarray möglicherweise nicht geortet werden können.

Gemäß der Erfindung ist die Steuereinheit ausgestaltet, neben der Kreuzkorrelations- oder Kovarianzmatrix noch folgende Informationen über das Antennenarray an die Auswerteeinheit zu übertragen: Position des Antennenarrays zum Zeitpunkt, da das von der Signalquelle emittierte Signal erfasst wurde; Ausrichtung des Antennenarrays; Größe und/oder Geometrie des Antennenarrays; einen Rauschleistungspegel.

Das Übermitteln dieser Informationen an die Auswerteeinheit ermöglicht es beispielsweise, dass die Position der Signalquelle in Positionskoordinaten in einem beliebigen Format, beispielsweise WGS-84, Breitengrade/Längengrade/-Höhe, absoluten kartesischen Koordinaten, etc., ermittelt wird und eine Triangulation nicht mehr erforderlich ist.

Gemäß einer weiteren Ausführungsform weist das System eine Mehrzahl von Antennenarrays und eine Mehrzahl von Steuereinheiten auf, wobei jeweils eine Steuereinheit einem Antennenarray zugeordnet ist und die Steuereinheit sowie das zugeordnete Antennenarray jeweils einer ersten Trägerplattform zugeordnet sind, wobei jedes Antennenarray der Mehrzahl von Antennenarrays von den anderen Antennenarrays der Mehrzahl von Antennenarrays räumlich beabstandet ist und angeordnet ist, das von der Signalquelle emittierte Signal aus einer jeweils eigenen Richtung zu erfassen, wobei jede Steuereinheit ausgestaltet ist, die Kreuzkorrelations- oder Kovarianzmatrix des ihr zugewiesenen Antennenarrays zu ermitteln und die ermittelte Kreuzkorrelations- oder Kovarianzmatrix an die Auswerteeinheit zu übertragen, und wobei die Auswerteeinheit ausgestaltet ist, die Position der Signalquelle basierend auf mindestens einigen der von der Mehrzahl von Steuereinheiten empfangenen Kreuzkorrelations- oder Kovarianzmatrizen zu ermitteln.

In dieser Ausführungsform wird das von der Signalquelle emittierte Signal von mehreren Antennenarrays erfasst, welche sich an unterschiedlichen Positionen befinden. Jedes Antennenarray erfasst das Signal gemäß ihrer relativen Position zu der Signalquelle und ihrer Ausrichtung zu der Signalquelle. Die einem Antennenarray zugeordnete Steuereinheit ermittelt die entsprechende Kreuzkorrelations- oder Kovarianzmatrix und überträgt diese an die Auswerteeinheit.

Die Auswerteeinheit kann alle Kreuzkorrelations- oder Kovarianzmatrizen oder einige der Kreuzkorrelations- oder Kovarianzmatrizen heranziehen, um die Position der Signalquelle basierend auf den Kreuzkorrelations- oder Kovarianzmatrizen zu ermitteln.

Die Auswerteeinheit kann beispielsweise in einer Bodenstation, die als Zentrale bezeichnet werden kann, angeordnet sein. Es ist auch denkbar, dass die Auswerteeinheit sich an Bord eines anderen Luftfahrzeugs befindet. Jedenfalls erhält die Auswerteeinheit Daten von der bzw. den Steuereinheit/en und dem bzw. den Antennenarray/s.

Die Antennenarrays und die Steuereinheit sind Einheiten, welche ein Signal empfangen, für sich genommen aber auf eine Ortungsfunktion der Signalquelle verzichten. Vielmehr ermittelt die Steuereinheit die Kreuzkorrelations- oder Kovarianzmatrix eines von dem ihr zugeordneten Antennenarray empfangenen Signals und überträgt die Kreuzkorrelations- oder Kovarianzmatrix an die Auswerteeinheit, wo die Ortung ausgeführt wird.

Gemäß einer weiteren Ausführungsform weist die zweite Trägerplattform ein Antennenarray und eine zugeordnete Steuereinheit auf, wobei die zweite Trägerplattform eine mobile Einheit ist.

In dieser Ausgestaltung ist die Auswerteeinheit beispielsweise an Bord eines Luftfahrzeugs angeordnet, und dieses Luftfahrzeug enthält ebenfalls mindestens ein Antennenarray und mindestens eine Steuereinheit, welche die Kreuzkorrelations- oder Kovarianzmatrix eines von dem Antennenarray empfangenen Signals ermittelt und an die Auswerteeinheit überträgt. Dieses Luftfahrzeug kann ausgestaltet sein, dass es die Kreuzkorrelations- oder Kovarianzmatrix von anderen, räumlich von dem Luftfahrzeug getrennten, Antennenarrays empfängt und basierend darauf die Position der Signalquelle ermittelt.

Gemäß einer weiteren Ausführungsform ist die Steuereinheit der ersten Trägerplattform ausgestaltet, die Kreuzkorrelations- oder Kovarianzmatrix des Antennenarrays aus einer Mehrzahl von zeitlich aufeinanderfolgenden Signalerfassungsvorgängen an die Auswerteeinheit zu übermitteln.

Somit ist es möglich, die Position einer Signalquelle mit einem einzelnen Antennenarray zu ermitteln, indem dieses Antennenarray Signale zu unterschiedlichen Zeitpunkten erfasst, also mehrere zeitlich aufeinanderfolgende Signalerfassungsvorgänge durchführt.

Um das Signal von einer Signalquelle von Signalen anderer Signalquellen unterscheiden und über die Zeit verfolgen zu können, können beispielsweise sog. Trackingfilter verwendet werden, welche ein Signal charakterisieren und von anderen Signalen mit einer gewissen Wahrscheinlichkeit unterscheiden können.

Die zeitlich aufeinanderfolgenden Signalerfassungsvorgänge können an unterschiedlichen Positionen des Antennenarrays erfolgen, d.h. dass das Antennenarray sich zu den Zeitpunkten der zeitlich aufeinanderfolgenden Signalerfassungsvorgängen an unterschiedlichen geografischen Positionen befindet. Dies ermöglicht es, die Position einer stationären Signalquelle zu ermitteln.

Gemäß der Erfindung ist ein Verfahren zum Detektieren und Lokalisieren einer Signalquelle angegeben. Das Verfahren weist die folgenden Schritte auf: Erfassen eines von der Signalquelle emittierten Signals mittels eines Antennenarrays; Ermitteln einer kohärenten Kreuzkorrelations- oder Kovarianzmatrix des erfassten Signals mit gleicher Zeitbasis mittels einer Steuereinheit, die zusammen mit dem Antennenarray auf einer ersten Trägerplattform angeordnet ist, wobei die Kreuzkorrelations- oder Kovarianzmatrix eine symmetrische Matrix ist; Übertragen der Hälfte der Felder der Kreuzkorrelations- oder Kovarianzmatrix an eine Auswerteeinheit mittels leitungsloser Übertragung über einen Datenübertragungskanal, wobei die Auswerteeinheit auf einer zweiten Trägerplattform angeordnet ist und die zweite Trägerplattform räumlich getrennt von der ersten Trägerplattform ist; und Ermitteln einer Position der Signalquelle in der Auswerteeinheit basierend auf der Kreuzkorrelations- oder Kovarianzmatrix.

Die Kreuzkorrelations- oder Kovarianzmatrix enthält Informationen über die statistischen Eigenschaften des empfangenen Signals und drückt aus, wie das empfangene Signal von einer Antenne des Antennenarrays zu einer anderen Antenne desselben Antennenarrays korreliert ist. Die Steuereinheit bildet die Kreuzkorrelations- oder Kovarianzmatrix ausgehend von einer Empfangsmatrix der einzelnen Antennen des Antennenarrays. Die Kreuzkorrelations- oder Kovarianzmatrix enthält Informationen über die Amplitude und Phase des empfangenen Signals. Die Informationen über die Amplitude und Phase des empfangenen Signals von der Steuereinheit in der Kreuzkorrelations- oder Kovarianzmatrix werden an die Auswerteeinheit übermittelt und dienen dort zur Ermittlung der Position der Signalquelle. Zusätzlich zu der Kreuzkorrelations- oder Kovarianzmatrix werden noch folgende Informationen über das Antennenarray an die Auswerteeinheit übertragen: Position des Antennenarrays zum Zeitpunkt, da das von der Signalquelle emittierte Signal erfasst wurde; Ausrichtung des Antennenarrays; Größe und/oder Geometrie des Antennenarrays; einen Rauschleistungspegel.

Das Verfahren bildet die Schritte ab, welche beispielsweise von dem hierin beschriebenen System durchgeführt werden. Insbesondere entsprechen die Verfahrensschritte den Funktionen des Systems. Daher wird auf die im Zusammenhang mit dem System beschriebenen Funktionen verwiesen, was die Details der einzelnen Verfahrensschritte angeht.

Das hierin beschriebene Verfahren zeichnet sich im Wesentlichen dadurch aus, dass die Position der Signalquelle nicht basierend auf einer Triangulation, welche eine Positionsermittlung der Signalquelle durch mehrere Sensoren erfordert, erfolgt, sondern die Positionsermittlung der Signalquelle wird basierend auf einer Kreuzkorrelations- oder Kovarianzmatrix eines von einem Antennenarray erfassten Signals vorgenommen. Damit kann die Menge der zwischen den beispielsweise dezentral angeordneten Antennenarrays und der Auswerteeinheit übertragenen Daten reduziert werden. Das Ermitteln der Position wird insbesondere zentral in der Auswerteeinheit durchgeführt. Wenn mehrere Antennenarrays zum Erfassen eines von der Signalquelle emittierten Signals verwendet werden, kann an der zentralen Stelle der Auswerteeinheit ein effektiver Signal-Rausch-Abstand durch das Verwenden der Kreuzkorrelations- oder Kovarianzmatrizen von mehreren Antennenarrays verbessert werden, so dass auch schwierig zu entdeckende Signalquelle detektiert und lokalisiert werden können.

Das Verfahren sieht also eine Trennung zwischen Signalerfassung einerseits und Detektieren und Lokalisieren der Signalquelle andererseits vor. Die Signalerfassung wird dezentral durch ein oder mehrere Antennenarrays durchgeführt, von dem erfassten Signal wird die Kreuzkorrelations- oder Kovarianzmatrix gebildet, und diese Kreuzkorrelations- oder Kovarianzmatrix von einem oder mehreren Antennenarrays wird in der Auswerteeinheit herangezogen, um die Position der Signalquelle zu ermitteln.

Gemäß einer Ausführungsform wird das von der Signalquelle emittierte Signal mittels einer Mehrzahl von Antennenarrays, die mit jeweils einer zugeordneten Steuereinheit an unterschiedlichen geografischen Positionen auf jeweils ersten Trägerplattformen angeordnet sind, erfasst. Für jedes Erfassen des von der Signalquelle emittierten Signals mit jedem Antennenarray wird eine Kreuzkorrelations- oder Kovarianzmatrix ermittelt. Die Position der Signalquelle wird basierend auf mindestens einigen (d.h. zwei oder mehr) der ermittelten Kreuzkorrelations- oder Kovarianzmatrizen ermittelt.

In dieser Variante des Verfahrens wird das von der Signalquelle emittierte Signal im Wesentlichen zur gleichen Zeit von mehrere Antennenarrays an unterschiedlichen geografischen Positionen erfasst, wobei ein Antennenarray mit seinen mehreren Antennen die Phasenunterschiede der von den einzelnen Antennen erfassten Signale ermittelt.

Gemäß einer weiteren Ausführungsform wird das von der Signalquelle emittierte Signal mit einem einzelnen Antennenarray zu unterschiedlichen Zeitpunkten an unterschiedlichen Positionen erfasst. Für jedes Erfassen des von der Signalquelle emittierten Signals mit dem einzelnen Antennenarray wird eine Kreuzkorrelations- oder Kovarianzmatrix ermittelt. Die Position der Signalquelle wird basierend auf mindestens einigen der ermittelten Kreuzkorrelations- oder Kovarianzmatrizen ermittelt.

In dieser Ausführungsform wird das Signal von einem einzelnen Antennenarray zu unterschiedlichen Zeitpunkten an unterschiedlichen geografischen Positionen des Antennenarrays erfasst. Diese Ausführungsform eignet sich insbesondere für das Ermitteln der Position einer stationären Signalquelle, weil sich das Antennenarray für die unterschiedlichen Erfassungsvorgänge des emittierten Signals an unterschiedlichen Positionen befindet.

Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:

Fig. 1    eine schematische Darstellung von Teilen eines Systems gemäß einem Ausführungsbeispiel.

Fig. 2    eine schematische Darstellung eines Systems gemäß einem weiteren Ausführungsbeispiel.

Fig. 3    eine schematische Darstellung eines Systems gemäß einem weiteren Ausführungsbeispiel.

Fig. 4    eine schematische Darstellung der Signalverarbeitung in einer Antenne eines Antennenarrays.

Fig. 5    eine schematische Darstellung eines Antennenaperturmodells für die Signalverarbeitung.

Fig. 6    eine schematische Darstellung eines Systems gemäß einem Ausführungsbeispiel.

Detaillierte Beschreibung von Ausführungsbeispielen

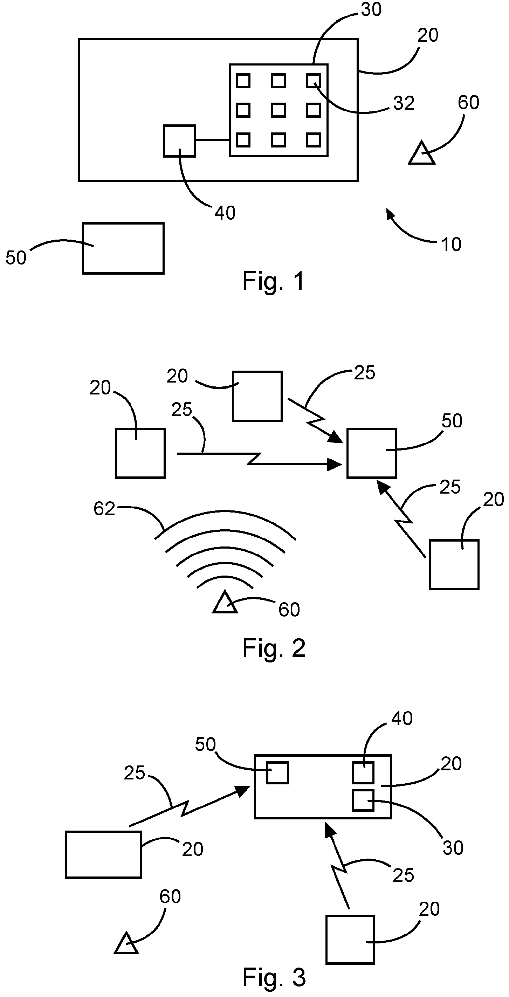

Fig. 1 zeigt ein System 10 zum Detektieren und Lokalisieren einer Signalquelle 60 basierend auf Signalen, die von der Signalquelle 60 emittiert werden. Das System 10 weist eine Trägerplattform 20, beispielsweise eine mobile Plattform in Form eines Luftfahrzeugs, auf. Die Trägerplattform 20 trägt ein Antennenarray 30 mit einer Mehrzahl von Antennen 32 sowie eine mit dem Antennenarray 30 verbundene Steuereinheit 40. Die Trägerplattform 20, welche das Antennenarray 30 und die dem Antennenarray 30 zugeordnete Steuereinheit 40 trägt, wird als erste Trägerplattform bezeichnet.

Das Antennenarray 30 empfängt ein von der Signalquelle 60 emittiertes Signal. Die Steuereinheit 40 ermittelt eine Kreuzkorrelations- oder Kovarianzmatrix zu dem von dem Antennenarray empfangenen Signal. Die Kreuzkorrelations- oder Kovarianzmatrix wird von der Steuereinheit 40 an die Auswerteeinheit 50 übertragen, beispielsweise über einen leitungslosen Funkübertragungskanal, der zwischen der Trägerplattform 20 und der Auswerteeinheit 50 aufgebaut ist.

Fig. 2 zeigt ein weiteres Beispiel eines Systems 10 mit mehreren Trägerplattformen 20. In diesem Beispiel sind alle Trägerplattformen 20 mobile Einheiten. Es ist aber auch denkbar, dass einige der Trägerplattformen 20 stationär sind.

Die Auswerteeinheit 50 ist räumlich getrennt von allen Trägerplattformen 20, beispielsweise ist die Auswerteeinheit 50 Teil einer stationären Bodeneinheit oder sie ist in einem Fahrzeug angeordnet. Jedenfalls erfüllt die Auswerteeinheit 50 die Funktion einer zentralen Datenaufnahmestelle für Daten (insbesondere die Kreuzkorrelations- oder Kovarianzmatrix) von den Trägerplattformen 20.

Zwischen den Trägerplattformen 20 und der Auswerteeinheit 50 ist jeweils ein Datenübertragungskanal 25 aufgebaut. Der Datenübertragungskanal ermöglicht eine Datenübertragung von den Trägerplattformen 20 zu der Auswerteeinheit 50. Der Datenübertragungskanal kann aber auch als bidirektionaler Datenübertragungskanal ausgestaltet sein, um das Übertragen von Daten von der Auswerteeinheit 50 an die Trägerplattformen 20 zu ermöglichen.

Der Datenübertragungskanal 25 ist insbesondere als leitungsloser Übertragungskanal ausgestaltet. Für diese Zwecke weisen die Trägerplattformen 20 und die Auswerteeinheit 50 geeignete Sende-/Empfangseinheiten auf, die jedoch nicht gesondert gezeigt sind. Für die Zwecke der Datenübertragung zwischen den Trägerplattformen 20 und der Auswerteeinheit 50 können sämtliche geeignete Übertragungsprotokolle und Übertragungstechniken verwendet werden. Insbesondere können militärische taktische Datenlinks verwendet werden.

Fig. 3 zeigt eine Ausgestaltung des Systems aus Fig. 2, bei dem die Auswerteeinheit 50 nicht als gesonderte Einrichtung angeordnet ist, sondern örtlich und strukturell mit einer Trägerplattform 20 verknüpft ist. An der Funktion ändert dies jedoch nichts. Die Auswerteeinheit 50 erhält auch in dieser Ausgestaltung die Kreuzkorrelations- oder Kovarianzmatrix von allen Trägerplattformen 20, einschließlich der Trägerplattform 20, der die Auswerteeinheit 50 zugeordnet ist. Die Trägerplattform 20, welche die Auswerteeinheit 50 trägt, wird als zweite Trägerplattform bezeichnet. Von dem Antennenarray 30, das sich gemeinsam mit der Auswerteeinheit 50 auf derselben Trägerplattform 20 befindet, erhält die Auswerteeinheit 50 die Kreuzkorrelations- oder Kovarianzmatrix beispielsweise über einen leitungsgebundenen Übertragungskanal. Es ist allerdings auch in diesem Fall möglich, eine leitungslose Verbindung zwischen dem Antennenarray 30 und der Auswerteeinheit 50 herzustellen, selbst wenn diese auf derselben Trägerplattform 20 angeordnet sind.

Auch wenn in den Fig. 1, 2, 3 lediglich eine Signalquelle 60 gezeigt ist, sei darauf hingewiesen, dass das System 20 sich auch eignet, mehrere Signalquellen 60 zu detektieren und zu lokalisieren.

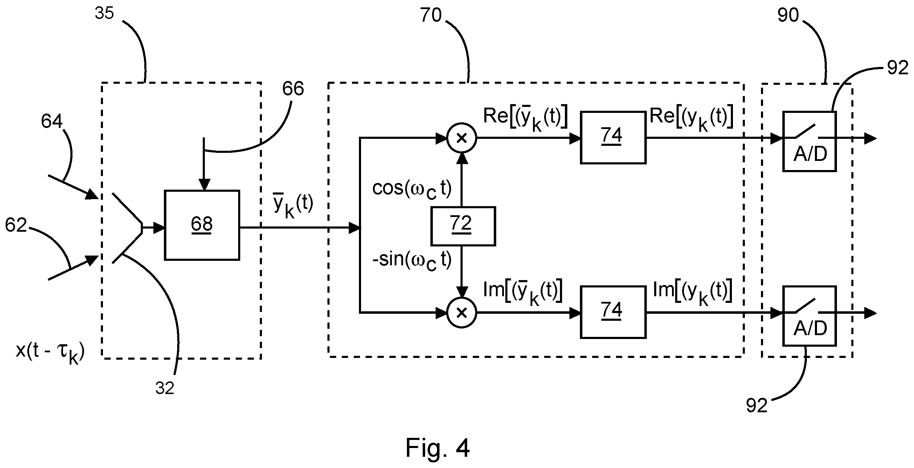

Fig. 4 zeigt allgemein den Aufbau einer Empfangseinheit 35 mit Antenne 32 sowie nachgelagerter Signalverarbeitung in einem Demodulator 70 bzw. Mischer und einem Analog-Digital-Wandler 90. Der in Fig. 4 gezeigte Aufbau kann als typischer analoger HF-Kanal bezeichnet werden. Die Antenne 32 empfängt das von einer Signalquelle emittierte Signal 62 sowie externes Rauschen 64. Weiteres Rauschen kann auch in der gezeigten Anordnung auftreten bzw. auf das Signal aufgeprägt werden, beispielsweise durch die elektronischen Bauteile. Die Signale werden von der Antenne 32 an Filtereinheiten 68 übertragen. In den Filtereinheiten 68 sowie der zugehörigen Verkabelung wirkt ggf. internes Rauschen 66 auf die verarbeiteten Signale. Die von der Empfangseinheit 35 ausgegebenen Signale werden einem Demodulator 70 zugeführt, in welchem die Signale durch Verwendung eines Oszillators 72 und Tiefpässen 74 verarbeitet werden. Anschließend werden die Signale von dem Demodulator 70 einem Analog-Digital-Wandler 90 mit zwei Wandlereinheiten 92 zugeführt. Der Demodulator 70 und der Analog-Digital-Wandler 90 weisen jeweils zwei Zweige auf, um die Verarbeitung komplexer Signale mit einem Realanteil und einem Imaginäranteil zu ermöglichen.

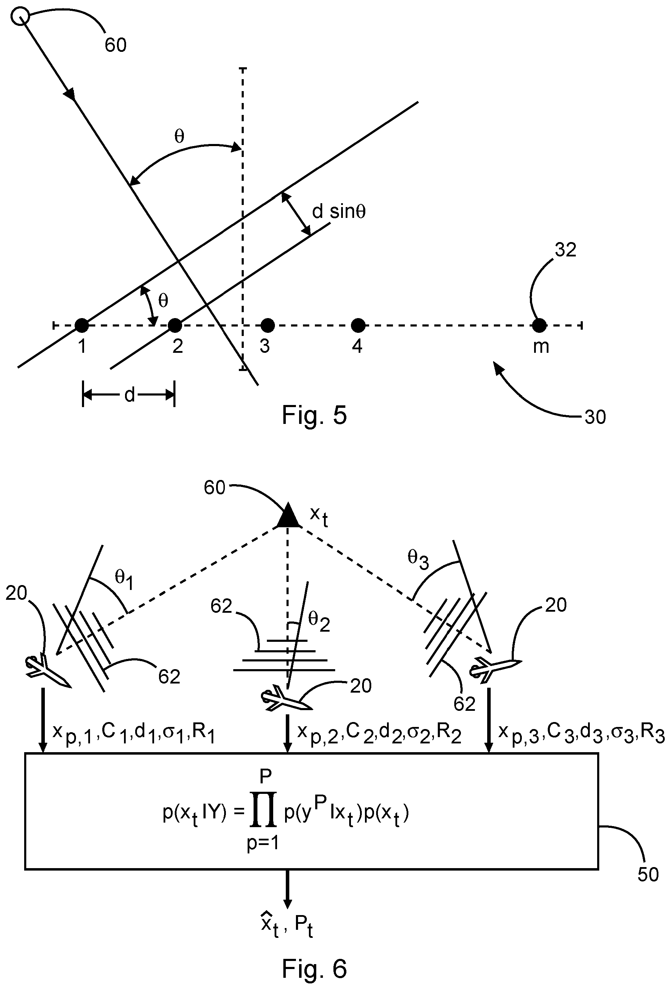

Fig. 5 zeigt ein Modell für ein lineares Antennenarray. Es mag sein, dass der Abstand d zwischen den einzelnen Antennen variiert, um verschiedene Frequenzen oder Frequenzbereiche abzudecken. Das Antennenarray 30 in Fig. 5 weist m Antennen 32 auf.

Die digitalisierten empfangenen Signale auf der Trägerplattform p können unter Verwendung der folgenden Gleichungen abgebildet werden, welche das Ermitteln einer Richtung unter Verwendung eines Antennenarrays beschreiben:

$$\vec{y} = \vec{a} \cdot \vec{s} + \vec{n} \tag{1}$$

wobei $\vec{y} = [\vec{y}_1, \ldots, \vec{y}_M]^T$ die empfangenen Signale für alle Antennen des Antennenarrays darstellt, die komplexen Amplituden $\vec{a}_d = ([a_1(\theta), \ldots, a_M(\theta)])^T$ und $\vec{a} = diag\{\vec{a}_d\}$ für alle Antennen von dem Einfallswinkel $\theta_m$, $m = 1, \ldots, M$ abhängen, das Signal als $\vec{s} = [\vec{s}_1, \ldots, \vec{s}_M]^T$ und das Rauschen als $\vec{n} = [\vec{n}_1, \ldots, \vec{n}_M]^T$ dargestellt ist.

Das Schmalbandsignal wird als für alle Antennen gleich angenommen und variiert in der Regel lediglich in der komplexen Amplitude $a(\theta_m)$, womit gilt $\vec{s}_m = \vec{s}_{m*}$, $m$, $m^* = 1, \ldots, M$.

Mit Bezugnahme auf Fig. 5 wird der Vektor a für das Antennenarray beschrieben als

$$a_m(\theta) = e^{-j\omega_m} \tag{2}$$

mit $\omega_m = 2\pi f_c c_0^{-1}(m-1)d\,sin(\theta)$

Das klassische Beamforming verwendet die folgende Funktion, welche nach Maxima untersucht wird:

$$\hat{\theta} = \arg\max 1_\theta \, \vec{a}_d^H \vec{R} \vec{a}_d \tag{3}$$

wobei die Kovarianzmatrix R des Antennenarrays das empfangene Signal darstellt

$$\vec{R} = E[\vec{y}^H \vec{y}] \tag{4}$$

Nachdem der Einfallswinkel $\hat{\theta}$ ermittelt wurde, kann er für die Lokalisierung der Signalquelle verwendet und für die Triangulation mit Hilfe von weiteren Einfallswinkeln, die von anderen Antennenarrays ermittelt wurden, übertragen werden.

Fig. 6 zeigt beispielhaft den hierin beschriebenen Ansatz zum Detektieren und Lokalisieren einer Signalquelle 60. Drei Trägerplattformen 20 mit einem Antennenarray (nicht gezeigt) und einer Steuereinheit (nicht gezeigt) erfassen ein von der Signalquelle 60 emittiertes Signal 62. Eine Kreuzkorrelations- oder Kovarianzmatrix des empfangenen Signals wird für jede Trägerplattform gebildet. Die Kreuzkorrelations- oder Kovarianzmatrix wird an die Auswerteeinheit 50 übertragen. Die Auswerteeinheit 50 verwendet die Kreuzkorrelations- oder Kovarianzmatrix von mehreren oder allen Trägerplattformen 20, um die Signalquelle 60 zu lokalisieren. Die Kovarianzmatrix R aus Gleichung (4) wird an die Auswerteeinheit 50 übertragen. Die Kovarianzmatrix R beschreibt die Eigenschaften des von den einzelnen Antennenarrays empfangenen Signals. Numerische Optimierungsverfahren können verwendet werden, um die Signalquellen zu lokalisieren.

Basierend auf Gleichung (1) kann eine Wahrscheinlichkeitsfunktion wie folgt formuliert werden:

$$p(\vec{y}|\theta) \propto \exp\left\{-\frac{1}{2\sigma^2}(\vec{y} - \vec{a}\vec{s})^H(\vec{y} - \vec{a}\vec{s})\right\} \tag{5}$$

Das Signal s kann ersetzt werden durch seine Kleinste-Quadrate-Schätzung ersetzt werden:

$$\vec{s} = (\vec{a}^H\vec{a})^{-1}\vec{a}^H\vec{y} \tag{6}$$

Wir Gleichung (6) in Gleichung (5) eingesetzt und unter Verwendung von Gleichung (4) erhält man:

$$p(\vec{y}|\theta) \propto \exp\left\{-\frac{1}{2\sigma^2}\parallel\left(\vec{I} - \vec{a}(\vec{a}^H\vec{a})^{-1}\vec{a}^H\right)\vec{y}\parallel^2\right\} \tag{7}$$

$$\propto \exp\left\{-\frac{1}{2\sigma^2}\mathrm{tr}\left[\left(\vec{I} - \vec{a}(\vec{a}^H\vec{a})^{-1}\vec{a}^H\right)\vec{R}\right]\right\}$$

Die Trägerplattform p kann beschrieben werden mit Bezug auf ihre Positionskoordinaten x, d.h. $p(\vec{y}|\vec{x})$. Die Einfallsrichtung eines Signals auf ein Antennenarray einer Trägerplattform p ist gegeben als

$$\theta_p = arctan2(x_p^E, x_p^N) \tag{8}$$

mit der Relativposition der Zielposition mit Bezug zu der Trägerplattform p:

$$x_\Delta = x - x_p \tag{9}$$

wobei $x_p$ die Position einer Trägerplattform ist.

Unter der Annahme von nicht korreliertem weißen Gaußschen Rauschen und mit der Bezugnahme auf die von einer Trägerplattform p empfangenen Signale als $\vec{y}^p$ ergibt sich die individuelle Wahrscheinlichkeitsfunktion pro Trägerplattform und kann wie folgt kombiniert werden:

$$p(\vec{Y}|\vec{x}) = \prod_{p=1}^P p(\vec{y}^p|\vec{x}) \tag{10}$$

$$\mathrm{mit}\ \vec{Y} = [\vec{y}^1, \dots, \vec{y}^P]$$

Der Zielzustandsvektor kann basierend auf dem Bayes'schen Theorem angegeben werden als:

$$p(\vec{x}|\vec{Y}) = \frac{p(\vec{Y}|\vec{x})p(\vec{x})}{p(\vec{Y})} \tag{11}$$

Hierauf können bekannte Filtertechniken angewandt werden, um eine Schätzung durchzuführen, so dass die Parameter ermittelt werden, die die Wahrscheinlichkeit maximieren.

Wie bereits weiter oben beschrieben, muss an die Auswerteeinheit 50 die Kovarianzmatrix R eines von dem Antennenarray erfassten Signal übermittelt werden. Insgesamt wird die Position der Trägerplattform 20 bzw. des Antennenarrays $\vec{x}_p$, die Orientierung $\vec{C}_p$ des Antennenarrays 30, die Größe und/oder Geometrie $\vec{d}_p$ des Antennenarrays,

und die jeweiligen Rauschleistungspegel $\sigma_p^2$ neben der Kovarianzmatrix $\vec{R}^p$ übertragen.

Das Auswerten der Wahrscheinlichkeitsfunktionen kann parallel für alle nötigen Datenpunkte erfolgen. Hierfür können neben konventionellen Ein- und Mehrkernprozessoren (CPUs, Central Processing Unit) sowie DSPs (Digital Signal Processor) z.B. auch FPGA (Field Programmable Gate Arrays) oder GPGPU (General Purpose Graphics Processing Unit) verwendet werden. Die zwischen den Trägerplattformen 20 oder von den Trägerplattformen 20 zu der Auswerteeinheit 50 übertragenen Informationen einer einzelnen Trägerplattform müssen für sich genommen nicht auf solche Daten beschränkt sein, die eine Signalquelle eindeutig lokalisieren. Vielmehr werden die Daten von mehreren Trägerplattformen in der Auswerteeinheit zusammengeführt und die Lokalisierung der Signalquelle erfolgt erst in der Auswerteeinheit 50, wie in Fig. 6 gezeigt.

Die Trägerplattformen 20 arbeiten zusammen und führen ihre erfassten Signale in der Auswerteeinheit 50 zusammen. Die Trägerplattformen 20 müssen dabei nicht in der Lage sein, die Signalquelle 60 basierend auf ihren eigenen Daten zu lokalisieren. Das Lokalisieren der Signalquelle 60 erfolgt vielmehr in der Auswerteeinheit 50, welche auf die Kreuzkorrelations- oder Kovarianzmatrizen der von den einzelnen Trägerplattformen 20 erfassten Signale 62 zurückgreift.

Bezugszeichenliste

| | |
|---|---|
| 10 | System |
| 20 | Trägerplattform |
| 25 | Datenübertragungskanal |
| 30 | Antennenarray |
| 32 | Antenne |
| 35 | Empfangseinheit |
| 40 | Steuereinheit |
| 50 | Auswerteeinheit |
| 60 | Signalquelle |
| 62 | emittiertes Signal |
| 64 | externes Rauschen |
| 66 | internes Rauschen |
| 68 | Filtereinheit |
| 70 | Demodulator |
| 72 | Oszillator |
| 74 | Tiefpass |
| 90 | Analog-Digital-Wandler |
| 92 | Wandlereinheit |

**Patentansprüche**

1. System (10) zum Detektieren und Lokalisieren einer Signalquelle (60), das System aufweisend:

   ein Antennenarray (30) mit einer Mehrzahl von Antennen (32);
   eine Steuereinheit (40), welche mit dem Antennenarray (30) verbunden ist;
   eine Auswerteeinheit (50), welche ausgestaltet ist, Daten von der Steuereinheit (40) zu empfangen;
   wobei die Antennen (32) ausgestaltet sind, ein von der Signalquelle (60) emittiertes Signal zu erfassen;
   wobei die Steuereinheit (40) ausgestaltet ist, eine Kreuzkorrelations- oder Kovarianzmatrix eines von dem Antennenarray (30) empfangenen Signals zu ermitteln;
   wobei die Steuereinheit (40) ausgestaltet ist, die Kreuzkorrelations- oder Kovarianzmatrix an die Auswerteeinheit (50) zu übertragen;
   **dadurch gekennzeichnet, dass**
   die Auswerteeinheit (50) ausgestaltet ist, eine Position der Signalquelle (60) basierend auf der von der Steuereinheit (40) empfangenen Kreuzkorrelations- oder Kovarianzmatrix zu ermitteln;
   das Antennenarray (30) und die Steuereinheit (40) auf einer ersten Trägerplattform (20) angeordnet sind;
   die Auswerteeinheit (50) auf einer zweiten Trägerplattform (20) angeordnet ist;
   die erste Trägerplattform (20) von der zweiten Trägerplattform (20) räumlich getrennt ist;
   die Auswerteeinheit (50) ausgestaltet ist, die Kreuzkorrelations- oder Kovarianzmatrix mittels leitungsloser Übertragung über einen Datenübertragungskanal zu erhalten;

die Kreuzkorrelations- oder Kovarianzmatrix eine symmetrische Matrix ist und die Steuereinheit (40) ausgestaltet ist, die Hälfte der Felder der Matrix zu übertragen;

die Steuereinheit (40) ausgestaltet ist, die Kreuzkorrelations- oder Kovarianzmatrix des empfangenen Signals mit gleicher Zeitbasis zu ermitteln, und dadurch eine kohärente Kreuzkorrelations- oder Kovarianzmatrix des Signals zu ermitteln;

die Kreuzkorrelations- oder Kovarianzmatrix Informationen über die statistischen Eigenschaften des empfangenen Signals enthält und ausdrückt, wie das empfangene Signal von einer Antenne des Antennenarrays zu einer anderen Antenne desselben Antennenarrays korreliert ist;

die Steuereinheit die Kreuzkorrelations- oder Kovarianzmatrix ausgehend von einer Empfangsmatrix der einzelnen Antennen des Antennenarrays bildet;

die Kreuzkorrelations- oder Kovarianzmatrix Informationen über die Amplitude und Phase des empfangenen Signals enthält;

die Informationen über die Amplitude und Phase des empfangenen Signals von der Steuereinheit in der Kreuzkorrelations- oder Kovarianzmatrix an die Auswerteeinheit übermittelt werden und dort zur Ermittlung der Position der Signalquelle dienen;

wobei die Steuereinheit (40) ausgestaltet ist, neben der Kreuzkorrelations- oder Kovarianzmatrix noch folgende Informationen über das Antennenarray an die Auswerteeinheit (50) zu übertragen:

Position des Antennenarrays (30) zum Zeitpunkt, da das von der Signalquelle (60) emittierte Signal erfasst wurde;
Ausrichtung des Antennenarrays;
Größe und/oder Geometrie des Antennenarrays;
einen Rauschleistungspegel.

2. System (10) nach Anspruch 1,

wobei das System (10) eine Mehrzahl von Antennenarrays (30) und eine Mehrzahl von Steuereinheiten (40) aufweist;

wobei jeweils eine Steuereinheit (40) einem Antennenarray (30) zugeordnet ist und die Steuereinheit (40) sowie das zugeordnete Antennenarray (30) jeweils einer ersten Trägerplattform (20) zugeordnet sind;

wobei jedes Antennenarray (30) der Mehrzahl von Antennenarrays von den anderen Antennenarrays der Mehrzahl von Antennenarrays räumlich beabstandet ist und angeordnet ist, das von der Signalquelle (60) emittierte Signal aus einer jeweils eigenen Richtung zu erfassen;

wobei jede Steuereinheit (40) ausgestaltet ist, die Kreuzkorrelations- oder Kovarianzmatrix des ihr zugewiesenen Antennenarrays zu ermitteln und die ermittelte Kreuzkorrelations- oder Kovarianzmatrix an die Auswerteeinheit (50) zu übertragen;

wobei die Auswerteeinheit (50) ausgestaltet ist, die Position der Signalquelle (60) basierend auf mindestens einigen der von der Mehrzahl von Steuereinheiten (40) empfangenen Kreuzkorrelations- oder Kovarianzmatrizen zu ermitteln.

3. System (10) nach einem der Ansprüche 1 oder 2,
wobei die zweite Trägerplattform (20) ein Antennenarray (30) und eine zugeordnete Steuereinheit (40) aufweist; und
wobei die zweite Trägerplattform eine mobile Einheit ist.

4. System (10) nach Anspruch 1,
wobei die Steuereinheit (40) der ersten Trägerplattform (20) ausgestaltet ist, die Kreuzkorrelations- oder Kovarianzmatrix des Antennenarrays (30) aus einer Mehrzahl von zeitlich aufeinanderfolgenden Signalerfassungsvorgängen an die Auswerteeinheit (50) zu übermitteln.

5. Verfahren zum Detektieren und Lokalisieren einer Signalquelle (60), aufweisend die folgenden Schritte:

Erfassen eines von der Signalquelle (60) emittierten Signals mittels eines Antennenarrays (30);
Ermitteln einer kohärenten Kreuzkorrelations- oder Kovarianzmatrix des erfassten Signals mit gleicher Zeitbasis mittels einer Steuereinheit (40), die zusammen mit dem Antennenarray (30) auf einer ersten Trägerplattform (20) angeordnet ist, wobei die Kreuzkorrelations- oder Kovarianzmatrix eine symmetrische Matrix ist;
Übertragen der Hälfte der Felder der Kreuzkorrelations- oder Kovarianzmatrix an eine Auswerteeinheit (50) mittels leitungsloser Übertragung über einen Datenübertragungskanal, wobei die Auswerteeinheit (50) auf einer zweiten Trägerplattform (20) angeordnet ist und die zweite Trägerplattform (20) räumlich getrennt von der ersten Trägerplattform (20) ist;

Ermitteln einer Position der Signalquelle (60) in der Auswerteeinheit (50) basierend auf der Kreuzkorrelations- oder Kovarianzmatrix;

wobei die Kreuzkorrelations- oder Kovarianzmatrix Informationen über die statistischen Eigenschaften des empfangenen Signals enthält und ausdrückt, wie das empfangene Signal von einer Antenne des Antennenarrays zu einer anderen Antenne desselben Antennenarrays korreliert ist;

wobei die Steuereinheit die Kreuzkorrelations- oder Kovarianzmatrix ausgehend von einer Empfangsmatrix der einzelnen Antennen des Antennenarrays bildet;

wobei die Kreuzkorrelations- oder Kovarianzmatrix Informationen über die Amplitude und Phase des empfangenen Signals enthält;

wobei die Informationen über die Amplitude und Phase des empfangenen Signals von der Steuereinheit in der Kreuzkorrelations- oder Kovarianzmatrix an die Auswerteeinheit übermittelt werden und dort zur Ermittlung der Position der Signalquelle dienen;

wobei zusätzlich zu der Kreuzkorrelations- oder Kovarianzmatrix noch folgende Informationen über das Antennenarray an die Auswerteeinheit (50) übertragen werden:

> Position des Antennenarrays (30) zum Zeitpunkt, da das von der Signalquelle (60) emittierte Signal erfasst wurde;
> Ausrichtung des Antennenarrays;
> Größe und/oder Geometrie des Antennenarrays;
> einen Rauschleistungspegel.

6. Verfahren nach Anspruch 5,

> wobei das von der Signalquelle emittierte Signal mittels einer Mehrzahl von Antennenarrays (30), die mit jeweils einer zugeordneten Steuereinheit (40) an unterschiedlichen geografischen Positionen auf jeweils ersten Trägerplattformen (30) angeordnet sind, erfasst wird;
> wobei für jedes Erfassen des von der Signalquelle emittierten Signals mit jedem Antennenarray (30) eine Kreuzkorrelations- oder Kovarianzmatrix ermittelt wird;
> wobei die Position der Signalquelle (60) basierend auf mindestens einigen der ermittelten Kreuzkorrelations- oder Kovarianzmatrizen ermittelt wird.

7. Verfahren nach Anspruch 5,

> wobei das von der Signalquelle emittierte Signal mit einem einzelnen Antennenarray (30) zu unterschiedlichen Zeitpunkten an unterschiedlichen Positionen erfasst wird;
> wobei für jedes Erfassen des von der Signalquelle emittierten Signals mit dem einzelnen Antennenarray eine Kreuzkorrelations- oder Kovarianzmatrix ermittelt wird;
> wobei die Position der Signalquelle (60) basierend auf mindestens einigen der ermittelten Kreuzkorrelations- oder Kovarianzmatrizen ermittelt wird.

**Claims**

1. A system (10) for detecting and locating a signal source (60), the system comprising:

> an antenna array (30) having a plurality of antennas (32);
> a control unit (40) connected to the antenna array (30);
> an evaluation unit (50) configured to receive data from the control unit (40);
> wherein the antennas (32) are configured to detect a signal emitted by the signal source (60);
> wherein the control unit (40) is configured to determine a cross-correlation or covariance matrix of a signal received by the antenna array (30);
> wherein the control unit (40) is configured to transmit the cross-correlation or covariance matrix to the evaluation unit (50);
> **characterized in that**
> the evaluation unit (50) is configured to determine a position of the signal source (60) based on the cross-correlation or covariance matrix received by the control unit (40);

the antenna array (30) and the control unit (40) are arranged on a first carrier platform (20);

the evaluation unit (50) is arranged on a second carrier platform (20);

the first carrier platform (20) is spatially separated from the second carrier platform (20);

the evaluation unit (50) is configured to obtain the cross-correlation or covariance matrix by means of wireless transmission via a data transmission channel;

the cross-correlation or covariance matrix is a symmetrical matrix and the control unit (40) is configured to transmit half of the fields of the matrix;

the control unit (40) is configured to determine the cross-correlation or covariance matrix of the received signal with the same time base, and thereby determine a coherent cross-correlation or covariance matrix of the signal;

the cross-correlation or covariance matrix contains information about the statistical properties of the received signal and expresses how the received signal is correlated from one antenna of the antenna array to another antenna of the same antenna array;

the control unit forms the cross-correlation or covariance matrix starting from a reception matrix of the individual antennas of the antenna array;

the cross-correlation or covariance matrix contains information about the amplitude and phase of the received signal;

the information about the amplitude and phase of the received signal is transmitted by the control unit in the cross-correlation or covariance matrix to the evaluation unit and is used there to determine the position of the signal source;

wherein the control unit (40) is configured to transmit the following information about the antenna array to the evaluation unit (50) in addition to the cross-correlation or covariance matrix:

> position of the antenna array (30) at the time when the signal emitted by the signal source (60) was detected;
> orientation of the antenna array;
> size and/or geometry of the antenna array;
> a noise power level.

2. The system (10) of claim 1,

wherein the system (10) comprises a plurality of antenna arrays (30) and a plurality of control units (40);

wherein a respective control unit (40) is associated with an antenna array (30) and the control unit (40) and the associated antenna array (30) are each associated with a first carrier platform (20);

wherein each antenna array (30) of the plurality of antenna arrays is spatially spaced from the other antenna arrays of the plurality of antenna arrays and is arranged to detect the signal emitted by the signal source (60) from a respective own direction;

wherein each control unit (40) is configured to determine the cross-correlation or covariance matrix of the antenna array assigned to it and to transmit the determined cross-correlation or covariance matrix to the evaluation unit (50);

wherein the evaluation unit (50) is configured to determine the position of the signal source (60) based on at least some of the cross-correlation or covariance matrices received by the plurality of control units (40).

3. The system (10) of one of claims 1 or 2,
wherein the second carrier platform (20) comprises an antenna array (30) and an associated control unit (40); and wherein the second carrier platform is a mobile unit.

4. The system (10) of claim 1,
wherein the control unit (40) of the first carrier platform (20) is configured to transmit the cross-correlation or covariance matrix of the antenna array (30) from a plurality of temporally successive signal detection processes to the evaluation unit (50).

5. A method for detecting and locating a signal source (60), comprising the following steps:

detecting a signal emitted by the signal source (60) by means of an antenna array (30);

determining a coherent cross-correlation or covariance matrix of the detected signal with the same time base by means of a control unit (40) which is arranged together with the antenna array (30) on a first carrier platform (20), wherein the cross-correlation or covariance matrix is a symmetrical matrix;

transmitting half of the fields of the cross-correlation or covariance matrix to an evaluation unit (50) by means of wireless transmission via a data transmission channel, wherein the evaluation unit (50) is arranged on a second carrier platform (20) and the second carrier platform (20) is spatially separated from the first carrier platform (20);
determining a position of the signal source (60) in the evaluation unit (50) based on the cross-correlation or covariance matrix;
wherein the cross-correlation or covariance matrix contains information about the statistical properties of the received signal and expresses how the received signal is correlated from one antenna of the antenna array to another antenna of the same antenna array;
wherein the control unit forms the cross-correlation or covariance matrix starting from a reception matrix of the individual antennas of the antenna array;
wherein the cross-correlation or covariance matrix contains information about the amplitude and phase of the received signal;
wherein the information about the amplitude and phase of the received signal is transmitted by the control unit in the cross-correlation or covariance matrix to the evaluation unit and is used there to determine the position of the signal source;
wherein the following information about the antenna array is also transmitted to the evaluation unit (50) in addition to the cross-correlation or covariance matrix:

> position of the antenna array (30) at the time when the signal emitted by the signal source (60) was detected;
> orientation of the antenna array;
> size and/or geometry of the antenna array;
> a noise power level.

6. The method of claim 5,

> wherein the signal emitted by the signal source is detected by means of a plurality of antenna arrays (30) which are each arranged with an associated control unit (40) at different geographical positions on respective first carrier platforms (30);
> wherein a cross-correlation or covariance matrix is determined for each detection of the signal emitted by the signal source with each antenna array (30);
> wherein the position of the signal source (60) is determined based on at least some of the determined cross-correlation or covariance matrices.

7. The method of claim 5,

> wherein the signal emitted by the signal source is detected with an individual antenna array (30) at different times at different positions;
> wherein a cross-correlation or covariance matrix is determined for each detection of the signal emitted by the signal source with the individual antenna array;
> wherein the position of the signal source (60) is determined based on at least some of the determined cross-correlation or covariance matrices.

**Revendications**

1. Système (10) pour détecter et localiser une source de signal (60), le système comprenant:

> un réseau d'antennes (30) avec une pluralité d'antennes (32) ;
> une unité de commande (40) qui est reliée au réseau d'antennes (30) ;
> une unité d'évaluation (50) qui est conçue pour recevoir des données de l'unité de commande (40);
> dans lequel les antennes (32) sont conçues pour détecter un signal émis par la source de signal (60);
> dans lequel l'unité de commande (40) est conçue pour déterminer une matrice de corrélation croisée ou de covariance d'un signal reçu par le réseau d'antennes (30);
> dans lequel l'unité de commande (40) est conçue pour transmettre la matrice de corrélation croisée ou de covariance à l'unité d'évaluation (50);
> **caractérisé en ce que**
> l'unité d'évaluation (50) est conçue pour déterminer une position de la source de signal (60) sur la base de la matrice de corrélation croisée ou de covariance reçue par l'unité de commande (40);
> le réseau d'antennes (30) et l'unité de commande (40) sont disposés sur une première plate-forme de support (20);

l'unité d'évaluation (50) est disposée sur une deuxième plate-forme de support (20);

la première plate-forme de support (20) est séparée spatialement de la deuxième plate-forme de support (20);

l'unité d'évaluation (50) est conçue pour obtenir la matrice de corrélation croisée ou de covariance au moyen d'une transmission sans fil sur un canal de transmission de données;

la matrice de corrélation croisée ou de covariance est une matrice symétrique et l'unité de commande (40) est conçue pour transmettre la moitié des champs de la matrice;

l'unité de commande (40) est conçue pour déterminer la matrice de corrélation croisée ou de covariance du signal reçu avec la même base de temps et pour déterminer ainsi une matrice de corrélation croisée ou de covariance cohérente du signal;

la matrice de corrélation croisée ou de covariance contient des informations sur les propriétés statistiques du signal reçu et exprime comment le signal reçu est corrélé d'une antenne du réseau d'antennes à une autre antenne du même réseau d'antennes;

l'unité de commande forme la matrice de corrélation croisée ou de covariance à partir d'une matrice de réception des différentes antennes du réseau d'antennes;

la matrice de corrélation croisée ou de covariance contient des informations sur l'amplitude et la phase du signal reçu;

les informations sur l'amplitude et la phase du signal reçu sont transmises par l'unité de commande dans la matrice de corrélation croisée ou de covariance à l'unité d'évaluation et y servent à déterminer la position de la source de signal;

dans lequel l'unité de commande (40) est conçue pour transmettre à l'unité d'évaluation (50), outre la matrice de corrélation croisée ou de covariance, les informations suivantes sur le réseau d'antennes:

position du réseau d'antennes (30) au moment où le signal émis par la source de signal (60) a été détecté;
orientation du réseau d'antennes;
taille et/ou géométrie du réseau d'antennes;
un niveau de puissance de bruit.

2. Système (10) selon la revendication 1,

dans lequel le système (10) comprend une pluralité de réseaux d'antennes (30) et une pluralité d'unités de commande (40);

dans lequel respectivement une unité de commande (40) est associée à un réseau d'antennes (30) et l'unité de commande (40) ainsi que le réseau d'antennes (30) associé sont respectivement associés à une première plate-forme de support (20);

dans lequel chaque réseau d'antennes (30) de la pluralité de réseaux d'antennes est espacé spatialement des autres réseaux d'antennes de la pluralité de réseaux d'antennes et est disposé pour détecter le signal émis par la source de signal (60) à partir d'une direction respectivement propre;

dans lequel chaque unité de commande (40) est conçue pour déterminer la matrice de corrélation croisée ou de covariance du réseau d'antennes qui lui est associé et pour transmettre la matrice de corrélation croisée ou de covariance déterminée à l'unité d'évaluation (50);

dans lequel l'unité d'évaluation (50) est conçue pour déterminer la position de la source de signal (60) sur la base d'au moins certaines des matrices de corrélation croisée ou de covariance reçues par la pluralité d'unités de commande (40).

3. Système (10) selon l'une des revendications 1 ou 2,
dans lequel la deuxième plate-forme de support (20) comprend un réseau d'antennes (30) et une unité de commande (40) associée; et dans lequel la deuxième plate-forme de support est une unité mobile.

4. Système (10) selon la revendication 1,
dans lequel l'unité de commande (40) de la première plate-forme de support (20) est conçue pour transmettre la matrice de corrélation croisée ou de covariance du réseau d'antennes (30) à l'unité d'évaluation (50) à partir d'une pluralité d'opérations de détection de signal successives dans le temps.

5. Procédé pour détecter et localiser une source de signal (60), comprenant les étapes suivantes:

détection d'un signal émis par la source de signal (60) au moyen d'un réseau d'antennes (30);
détermination d'une matrice de corrélation croisée ou de covariance cohérente du signal détecté avec la même base de temps au moyen d'une unité de commande (40) qui est disposée conjointement avec le réseau d'antennes (30) sur une première plate-forme de support (20), dans lequel la matrice de corrélation croisée ou de covariance est une matrice symétrique;

transmission de la moitié des champs de la matrice de corrélation croisée ou de covariance à une unité d'évaluation (50) au moyen d'une transmission sans fil sur un canal de transmission de données, dans lequel l'unité d'évaluation (50) est disposée sur une deuxième plate-forme de support (20) et la deuxième plate-forme de support (20) est séparée spatialement de la première plate-forme de support (20);

détermination d'une position de la source de signal (60) dans l'unité d'évaluation (50) sur la base de la matrice de corrélation croisée ou de covariance;

dans lequel la matrice de corrélation croisée ou de covariance contient des informations sur les propriétés statistiques du signal reçu et exprime comment le signal reçu est corrélé d'une antenne du réseau d'antennes à une autre antenne du même réseau d'antennes;

dans lequel l'unité de commande forme la matrice de corrélation croisée ou de covariance à partir d'une matrice de réception des différentes antennes du réseau d'antennes;

dans lequel la matrice de corrélation croisée ou de covariance contient des informations sur l'amplitude et la phase du signal reçu;

dans lequel les informations sur l'amplitude et la phase du signal reçu sont transmises par l'unité de commande dans la matrice de corrélation croisée ou de covariance à l'unité d'évaluation et y servent à déterminer la position de la source de signal;

dans lequel, en plus de la matrice de corrélation croisée ou de covariance, les informations suivantes sur le réseau d'antennes sont transmises à l'unité d'évaluation (50):

position du réseau d'antennes (30) au moment où le signal émis par la source de signal (60) a été détecté;
orientation du réseau d'antennes;
taille et/ou géométrie du réseau d'antennes;
un niveau de puissance de bruit.

6.   Procédé selon la revendication 5,

dans lequel le signal émis par la source de signal est détecté au moyen d'une pluralité de réseaux d'antennes (30) qui sont disposés avec respectivement une unité de commande (40) associée à différentes positions géographiques sur respectivement des premières plates-formes de support (30);

dans lequel, pour chaque détection du signal émis par la source de signal, une matrice de corrélation croisée ou de covariance est déterminée avec chaque réseau d'antennes (30);

dans lequel la position de la source de signal (60) est déterminée sur la base d'au moins certaines des matrices de corrélation croisée ou de covariance déterminées.

7.   Procédé selon la revendication 5,

dans lequel le signal émis par la source de signal est détecté avec un réseau d'antennes (30) individuel à différents moments à différentes positions;

dans lequel, pour chaque détection du signal émis par la source de signal, une matrice de corrélation croisée ou de covariance est déterminée avec le réseau d'antennes individuel;

dans lequel la position de la source de signal (60) est déterminée sur la base d'au moins certaines des matrices de corrélation croisée ou de covariance déterminées.

Fig. 1

Fig. 2

Fig. 3

Fig. 4

Fig. 5

$$p(x_t|Y) = \prod_{p=1}^{P} p(y^P|x_t)p(x_t)$$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9957574 A1
- WO 2016207603 A1